(19) Europäisches Patentamt
European Patent Office
Office européen des brevets

(11) **EP 4 264 200 B1**

(12) **EUROPÄISCHE PATENTSCHRIFT**

(45) Veröffentlichungstag und Bekanntmachung des Hinweises auf die Patenterteilung:
**14.05.2025 Patentblatt 2025/20**

(21) Anmeldenummer: **21824498.6**

(22) Anmeldetag: **26.11.2021**

(51) Internationale Patentklassifikation (IPC):
**G01F 1/74** (2006.01)    **G01N 22/00** (2006.01)
**G01N 33/00** (2006.01)

(52) Gemeinsame Patentklassifikation (CPC):
**G01F 1/74; G01N 22/00**

(86) Internationale Anmeldenummer:
**PCT/EP2021/083214**

(87) Internationale Veröffentlichungsnummer:
**WO 2022/128417 (23.06.2022 Gazette 2022/25)**

(54) **VERFAHREN ZUM BESTIMMEN EINER BELAGSEIGENSCHAFT**

METHOD FOR DETERMINING A COATING PROPERTY

PROCÉDÉ DE DÉTERMINATION D'UNE PROPRIÉTÉ DE REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2020 DE 102020133858**

(43) Veröffentlichungstag der Anmeldung:
**25.10.2023 Patentblatt 2023/43**

(73) Patentinhaber: **Endress+Hauser Flowtec AG**
**4153 Reinach (CH)**

(72) Erfinder:
• **HABERMEHL, Anne**
**85435 Erding (DE)**
• **PFLÜGER, Stefan**
**80995 München (DE)**
• **DRAHM, Wolfgang**
**85354 Freising (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
US-A1- 2016 054 161      US-A1- 2017 160 069
US-B2- 8 027 794      US-B2- 9 063 052

**Beschreibung**

Die Erfindung betrifft ein Verfahren zum Bestimmen einer Belagseigenschaft eines veränderlichen Belages, eine Messanordnung und eine Prozessanlage.

Mittels Mikrowellen lassen sich insbesondere die physikalischen Größen Permittivität sowie Verlustfaktor eines Mediums in einer Prozessleitung ermitteln. Aus diesen beiden Größen - gemessen entweder bei einer oder über viele unterschiedliche Frequenzen - lassen sich Rückschlüsse auf anwendungsspezifische Parameter ziehen, beispielsweise auf den Anteil von Wasser in einem Gemisch aus Wasser und anderen nicht oder wenig polaren Komponenten.

Die etablierte Transmissions-/Reflexionsmessung ist beschrieben in L.F. Chen, C.K. Ong, C.P. Neo, V.V. Varadan, V. K. Varadan - "Microwave Electronics, Measurement and Materials Characterization", John Wiley & Sons Ltd., 2004. Hierfür wird das Mikrowellensignal an zwei unterschiedlichen Positionen an das Medium in einem Behälter bzw. Messrohr angekoppelt, die Streuparameter (Transmission und ggfs. Reflexion) zwischen diesen Ankoppelstrukturen gemessen und aus den gemessenen Streuparametern auf die genannten physikalischen Eigenschaften des Mediums zurückgerechnet.

Die US 2017/160069 A1 lehrt eine Vorrichtung und eine Methode zur Messung von Eigenschaften eines in einem Rohr geführten Mediums und der Dicke einer dielektrischen Schicht an der Innenseite des Rohrs, insbesondere in Bezug auf die Bildung von Belägen. Die gelehrten Sensoren senden Mikrowellensignale und empfangen die in verschiedenen Frequenzbereichen die an Bereichsgrenzen reflektierten Signale.

Die US 9063052 lehrt eine Vorrichtung mit mehreren Sensoren, die unterschiedliche Sensoreigenschaften aufweisen. Die Sensoren können eine Reihe von dielektrischen Messungen von in einem Rohr geführten Medium bei einer Vielzahl von Abfragefrequenzen mittels einer Mikrowellen durchführen. Die Vorrichtung kann verschiedene Eigenschaften des im Rohr vorhandenen Mediums ermitteln, unter anderem eine Belagsbildung an einer Rohrinnenseite.

Die WO 2018/121927 A1 lehrt eine Messanordnung zur Analyse von Eigenschaften eines strömenden Mediums mittels Mikrowellen. Dabei weist die Messanordnung zusätzlich zu den Mikrowellenantennen eine elektrisch isolierende Auskleidungsschicht an der inneren Mantelfläche des Messrohres auf. Diese Auskleidungsschicht bildet einen dielektrischen Wellenleiter über den Mikrowellen zumindest anteilig von einer ersten Mikrowellenantenne zu einer zweiten Mikrowellenantenne gelangen können. Eine Anwendung für eine derartige Messanordnung ist die Bestimmung von Feststoffanteilen im zu führenden Medium. Derartige Anwendungen ringen mit Belagsbildung - bspw. durch den Feststoff im Medium - an der inneren Mantelfläche des Messrohres und an den Mikrowellenantennen.

Der Erfindung liegt daher die Aufgabe zugrunde ein vereinfachtes jedoch verlässliches Verfahren für eine Messanordnung bereit zu stellen, mit dem die Belagseigenschaften eines veränderlichen Belages auf einer Stirnfläche einer ersten Mikrowellenantenne unabhängig von einem Medium ermittelbar sind..

Die Aufgabe wird gelöst durch das Verfahren nach Anspruch 1.

Das erfindungsgemäße Verfahren zum Bestimmen einer Belagseigenschaft eines veränderlichen Belages auf einer Stirnfläche einer ersten Mikrowellenantenne einer Anordnung zum Bestimmen einer Mediumseigenschaft eines zu führenden insbesondere mehrphasigen Mediums,

wobei die erste Mikrowellenantenne in einer ersten Aufnahme des Messrohres, insbesondere mediumsberührend angeordnet ist,

umfasst die Verfahrensschritte:

- Ausstrahlen eines Erregersignales mittels der ersten Mikrowellenantenne,

   wobei das Erregersignal eine Folge von Hochfrequenzsignalen umfasst;

   - Empfangen eines von einer Grenzfläche zu dem Belag oder von einer Grenzfläche zu dem Medium reflektierten Erregersignals mittels der ersten Mikrowellenantenne;

   - Ermitteln einer ersten Prüfgröße anhand des reflektierten Erregersignals;

   - Bestimmen der Belagseigenschaft des veränderlichen Belages, insbesondere einer von einer Belagsdicke des veränderlichen Belages abhängigen Größe anhand der ersten Prüfgröße-;

   - wobei die erste Prüfgröße eine Summe, ein Integral oder ein Mittelwert über einen ersten Frequenzbereich des reflektierten Erregersignals umfasst.

Die erfindungsgemäße Messanordnung umfasst:

- ein Messrohr zum Führen eines mehrphasigen Mediums;

- eine erste Mikrowellenantenne, welche in einer ersten Aufnahme des Messrohres angeordnet ist;

- eine Messschaltung,

wobei die Messschaltung einen Hochfrequenzgenerator zum Speisen der ersten Mikrowellenantennen mit einem Erregersignal, insbesondere mit einer Folge von Hochfrequenzsignalen aufweist,

wobei die Messschaltung zudem dazu eingerichtet ist, das erfindungsgemäße Verfahren auszuführen.

Die erfindungsgemäße Prozessanlage umfasst:

- die erfindungsgemäße Messrohranordnung,

- eine Vorrichtung zum Ermitteln einer weiteren Prozesseigenschaft des Mediums, insbesondere eines Volumendurchflusses,

wobei die Vorrichtung zum Ermitteln der weiteren Prozesseigenschaft eine Messschaltung zum Ermitteln einer von der Prozesseigenschaft abhängigen Messgröße aufweist,

wobei die Messschaltung dazu eingerichtet ist, eine korrigierte Prozesseigenschaft in Abhängigkeit der ermittelten Messgröße und der Belagseigenschaft zu bestimmen.

Vorteilhafte Ausgestaltung der Erfindung sind Gegenstand der Unteransprüche.
Der erste Frequenzbereich deckt vorzugsweise die Frequenzen von 0,3 bis 20 GHz, insbesondere von 1,8 bis 7,5 GHz und bevorzugt von 1,8 bis 3,5 GHz ab.
Eine Ausgestaltung sieht vor, dass die Anordnung eine insbesondere diametral zur ersten Mikrowellenantenne angeordnete zweite Mikrowellenantenne aufweist, welche in einer zweiten Aufnahme des Messrohres insbesondere mediumsberührend angeordnet ist, wobei die Ausgestaltung die Verfahrensschritte umfasst:

- Empfangen des Erregersignales mittels der zweiten Mikrowellenantenne

- Ermitteln einer zweiten Prüfgröße anhand des transmittierten Erregersignales und/oder anhand einer Transformierten, insbesondere einer Integraltransformierten des transmittierten Erregersignales und bevorzugt anhand einer inversen Fouriertransformierten,

wobei die zweite Prüfgröße charakteristisch für die Ausbreitung des Erregersignals entlang eines Ausbreitungspfades durch ein Innenvolumen des Messrohres ist,

wobei der Ausbreitungspfad eine zumindest anteilige Ausbreitung des Erregersignales zumindest durch den veränderlichen Belag auf der Stirnfläche der ersten Mikrowellenantenne und einer inneren Mantelfläche des Messrohres beschreibt,

wobei in die Ermittlung der Belagseigenschaft des veränderlichen Belages, insbesondere einer von einer Belagsdicke des veränderlichen Belages abhängigen Größe die zweite Prüfgröße eingeht.

Die erste Prüfgröße gibt Auskunft über das Vorliegen eines Belages auf der Stirnfläche der ersten Mikrowellenantenne und über die Dicke des Belages, jedoch nicht über die Verteilung des Belages auf der inneren Mantelfläche des Messrohres. Mit Hinzunahme der zweiten Prüfgröße lässt sich bestimmen, ob der Belag die innere Mantelfläche bedeckt und somit den Durchflussquerschnitt wesentlich reduziert.

Eine Ausgestaltung sieht vor, dass das transmittierte Erregersignal eine dritte Frequenz umfasst, bei der die Dämpfung des transmittierten Erregersignals einen dritten Extremwert, insbesondere einen maximalen Wert annimmt,

wobei ausschließlich eindeutig auf das Vorliegen des veränderlichen Belags auf der Stirnfläche geschlossen wird, wenn die erste Prüfgröße, insbesondere die Dämpfung des reflektierten Erregersignales für eine erste Frequenz oder eine gemittelte Dämpfung über einen ersten Frequenzbereich zunimmt und die erste Frequenz von der dritten Frequenz abweicht,

wobei die dritte Frequenz einer Messrohrresonanz entspricht.

Eine Ausgestaltung sieht den Verfahrensschritt vor:

- Ermitteln eines korrigierten Rohrquerschnittes in Abhängigkeit der ersten Prüfgröße, wenn die zweite Prüfgröße von einem Sollwertbereich abweicht.

Eine Ausgestaltung sieht vor, dass die Messanordnung

- eine zweite Mikrowellenantenne umfasst, welche in einer zweiten Aufnahme des Messrohres, insbesondere diametral zur ersten Mikrowellenantenne angeordnet ist,

wobei die Messschaltung dazu eingerichtet ist, anhand eines mittels der zweiten Mikrowellenantenne gemessenen transmittierten Erregersignales mindestens eine Eigenschaft des in dem Messrohr geführten mehrphasigen Mediums zu bestimmen.

Die Erfindung wird anhand der nachfolgenden Figuren näher erläutert. Es zeigt:

Fig. 1a: eine räumliche Darstellung eines Ausführungsbeispiels einer Messanordnung nach dem Stand der Technik;

Fig. 1b: eine Seitenansicht der Messanordnung aus Fig. 1a;

Fig. 1c: einen Querschnitt durch die Messanordnung aus Fig. 1b in der Ebene C-C;

Fig. 1d: einen Querschnitt durch die Messanordnung aus Fig. 1b in der Ebene D-D;

Fig. 1e: eine Detailansicht der Messanordnung aus Fig. 1d an der mit E gekennzeichneten Position;

Fig. 2: exemplarische Darstellungen zur Wellenausbreitung des transmittierten Erregersignals bei einem Messrohr mit und ohne veränderlichen Belag;

Fig. 3: exemplarische Simulationsergebnisse zur Feldverteilung einer Wellenausbreitung in einem erfindungsgemäßen Messanordnung mit einem durchgängigen veränderlichen Belag;

Fig. 4: ein transmittiertes Erregersignal über einen Frequenzbereich von 1,8 bis 3,0 GHz und die inverse Fast-Fourier Transformierte des transmittierten Erregersignals;

Fig. 5: exemplarische Darstellungen zur Wellenausbreitung des reflektierten bei einem Messrohr mit und ohne veränderlichen Belag;

Fig. 6: eine perspektivische Ansicht auf eine weitere Ausgestaltung der erfindungsgemäßen Messanordnung;

Fig. 7: ein reflektiertes Erregersignal über einen Frequenzbereich von 1,8 bis 3,0 GHz und ein Mittelwert des reflektierten Erregersignales in Abhängigkeit der Belagsdicke;

Fig. 8: schematisch eine Prozessanlage mit einer erfindungsgemäßen Messanordnung; und

Fig. 9: eine erfindungsgemäße Verfahrenskette des Verfahrens zum Bestimmen einer Belagseigenschaft eines veränderlichen Belages.

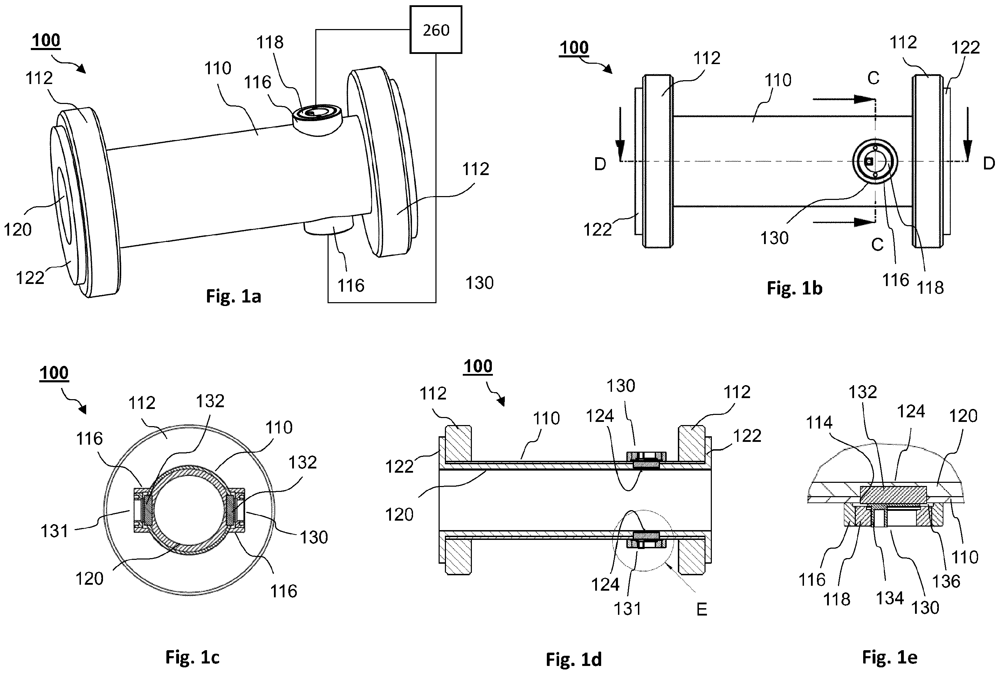

Die in Fign. 1a bis 1e dargestellte Messanordnung 100 umfasst ein abschnittsweise zylindrisches Messrohr 110 mit endseitigen, metallischen Anschlussflanschen 112, das mit einem - nicht erfindungswesentlichen - Liner 120 ausgekleidet ist, der einen Kunststoff umfasst, beispielsweise ein Polyurethan oder ein Fluoropolymer wie PFA oder PTFE aufweist. Der Liner 120 kann stirnseitig Dichtflächen 122 aufweisen, die aus dem Messrohr 110 herausgeführt sind und an den Stirnseiten der Flansche 112 anliegen. Um Mikrowellen ein- und auskoppeln zu können, umfasst die Messanordnung 100 zwei an einer Mantelfläche des Messrohrs 110 einander gegenüberliegend angeordnete Mikrowellenantennen 130, 131, deren Einzelheiten insbesondere in Fig. 1e dargestellt sind. Im Bereich der Mikrowellenantennen 130, 131 weist das Messrohr 110 jeweils einen Durchbruch 114 auf, welcher an der äußeren Mantelfläche des Messrohrs 100 mit einer Gewindehülse 116 umgeben ist, in welche ein Spannring 118 eingeschraubt ist, um eine Keramikplatte 132, welche einen Trägerkörper für eine Planarantenne bildet, sowie eine an der Keramikplatte 132 außenseitig angeordnete Anschlussplatine 134 gegen den Liner 120 einzuspannen. Zum Ausgleich von Temperaturschwankungen und Fertigungstoleranzen kann zwischen dem Spannring 118 und der Keramikplatte 132 bzw. der Anschlussplatine 134 zusätzlich eine elastischer Ring 136 angeordnet sein. Der Liner 120 weist an der Position der Keramikplatte 132 von seiner Außenseite her eine Vertiefung 124 auf, die vollständig von der Keramikplatte 132 ausgefüllt wird. Im Ergebnis ist ein Trägerkörper einer Planarantenne in den Liner 120 eingebracht, ohne die Integrität des Liners 120 zum Inneren des Messrohrs hin zu beeinträchtigen. Zudem bleibt die Druckfestigkeit der Messanordnung durch geeignete Dimensionierung der Keramikplatte 132 und des Spannrings 118 erhalten. Für die abgebildete Messanordnung 100 wäre es vorteilhaft, wenn der Liner 120 zusätzlich in Längsrichtung des Messrohrs 110 durch elektrisch leitendes Material, insbesondere Metall begrenzt wäre. Ein Beispiel dafür wäre ein über die Prozessanschlüsse 112 verbundenes metallisches Rohr einer Rohrleitung. Weiterhin umfasst die Messanordnung 100 eine Messschaltung 260 welche mit den Mikrowellenantennen 130, 131 verbunden ist. Die Messschaltung 260 weist einen Hochfrequenzgenerator zum Speisen der ersten Mikrowellenantennen 130 mit einem Erregersignal, insbesondere mit einer Folge von Hochfrequenzsignalen auf und ist dazu eingerichtet, anhand eines von der zweiten Mikrowellenantenne 131 empfangenen Erregersignales mindestens eine Prozesseigenschaft eines in dem Messrohr 110 geführten Mediums zu bestimmen, wobei die Prozesseigenschaft einem Feststoffanteil im Medium entspricht. Weiterhin ist die Messschaltung 260 zudem dazu eingerichtet, das erfindungsgemäße Verfahren auszuführen.

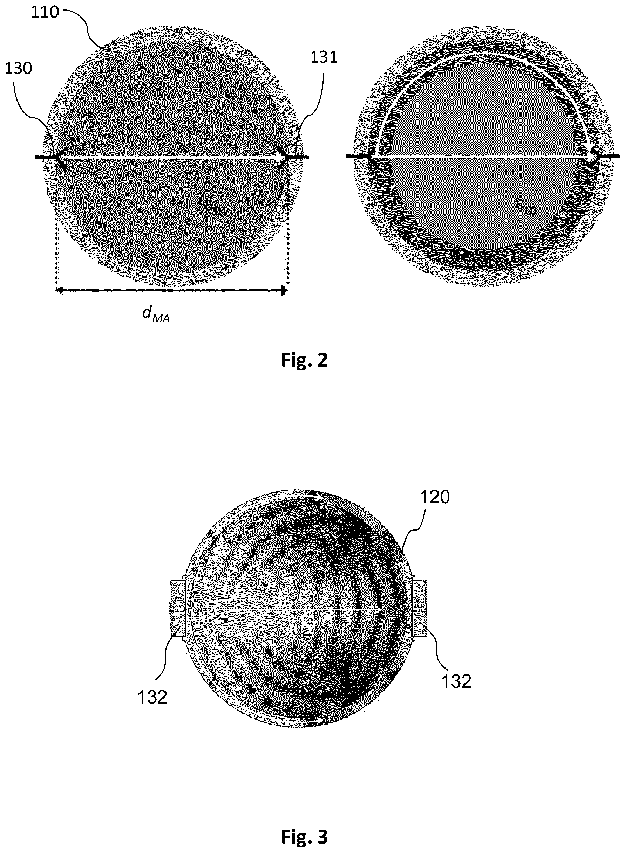

Fig. 2 zeigt eine exemplarische Darstellungen zur Wellenausbreitung des transmittierten Erregersignals bei einem Messrohr ohne veränderlichen Belag (links) und mit veränderlichen Belag (rechts). Der Querschnitt zeigt eine erste Mikrowellenantenne 130 und eine zweite Mikrowellenantenne 131, welche diametral an einem Messrohr 110 angeordnet und über einen kürzesten Abstand $d_{MA}$ beabstandet sind. Die erste Mikrowellenantenne 130 ist dazu eingerichtet, das Erregersignal zu erzeugen und in das zu führende Medium einzuspeisen. Die zweite Mikrowellenantenne 131 ist dazu eingerichtet, das transmittierte Erregersignal zu erfassen. Beide Mikrowellenantennen 130, 131 sind dazu geeignet Erregersignale zu erzeugen und zu erfassen. Das Messrohr 110 umfasst in dem Fall ein metallisches Trägerrohr ohne elektrisch isolierende Auskleidung an der inneren Mantelfläche. Liegt in der Messanordnung 100 kein veränderlicher Belag vor, so breitet sich das Erregersignal im Wesentlichen durch das Medium mit der Dielektrizitätskonstante $\varepsilon_m$ aus. Der Einfachheit halber wird auf die Berücksichtigung der Ausbreitung des Erregersignals entlang des Trägerrohes verzichtet.

Der weiße Pfeil deutet den kürzesten Weg für das Erregersignal an. Eine Untergrenze der Laufzeit des Erregersignals durch das Medium liegt bei

$$\tau_M = d_{MA} \cdot \frac{\sqrt{\varepsilon_m}}{c_0} \sim 2{,}4\ ns,$$

wobei $c_0$ die Lichtgeschwindigkeit in Vacuum ist und für die Dielektrizitätskonstante $\varepsilon_M$ der Wert von Wasser angenommen wird. Bildet sich an der inneren Fläche des Messrohres ein durchgehender Belag mit einer Dielektrizitätskonstante von $\varepsilon_{Belag}$ aus, welcher die beiden Mikrowellenantennen 130, 131 miteinander verbindet und die Stirnflächen ebendieser jeweils bedeckt, so bildet sich ein weitere Pfad aus, entlang dem sich das Erregersignal bevorzugt ausbreitet (siehe gebogenen Pfeil). Die Laufzeit für den weiteren Pfad lässt sich bestimmen durch

$$\tau_M = \frac{\pi}{2} \cdot d_{MA} \cdot \frac{\sqrt{\varepsilon_m}}{c_0} \sim 0{,}7\ ns,$$

wobei als Wert für die Dielektrizitätskonstante $\varepsilon_{Belag}$ ein typischer Wert für gesättigter Kohlenstoff angenommen wird. Die Laufzeit des Erregersignals entlang des weiteren Pfades liegt somit deutlich unterhalb der Untergrenze für die Laufzeit des Erregersignales durch das Medium Wasser. Das erfindungsgemäße Verfahren zur Bestimmung des Vorliegens einer Belagseigenschaft eines veränderlichen Belages macht sich dies zu Nutze und leitet anhand der ermittelten Laufzeiten des transmittierten Signales das Vorliegen eines Belages und dessen Belagseigenschaften ab.

Jede der sich vorwiegend im veränderlichen Belag ausbreitenden Moden führt zu einer zugehörigen Stromdichteverteilung in den leitfähigen Grenzflächen. Eine derartige Stromdichteverteilung in der medienberührenden Grenzschicht des Liners bedingt jedoch auch die Ausbreitung eines elektromagnetischen Feldes in das nicht ideal leitfähige Medium hinein. Die Grenzschicht erfüllt also die Funktion einer Antenne. Durch die schnellere Ausbreitungsgeschwindigkeit im veränderlichen Belag im Vergleich zu typischen, wässrigen Medien kommt es dabei zu einer gerichteten Abstrahlung elektromagnetischer Leistung durch das Medium, wie in Fig. 3 dargestellt ist. Die Graustufen entsprechen hier der elektrischen Feldstärke.

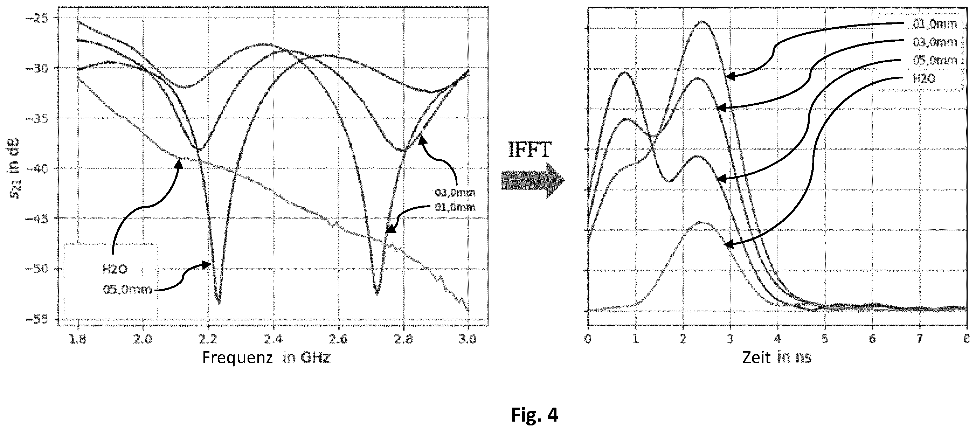

Fig. 4 zeigt beispielhaft transmittierte Erregersignale an Wasser als zu führendes Medium, wobei das Erregersignal eine Vielzahl an Signalen mit unterschiedlichen Frequenzen ist. Das gemessene Erregersignal der Referenzmessung H2O, bei der kein Belag vorliegt nimmt über den gesamten Frequenzbereich - bei Vernachlässigung des Rauschens bzw. der Messungenauigkeit - kontinuierlich ab, d.h. die Dämpfung des Erregersignals nimmt mit zunehmender Frequenz zu. Bei dem Vorliegen eines kontinuierlichen Belages an der inneren Mantelfläche des Messrohres bilden sich **unabhängig** von der Dicke des Belages - 1, 3 oder 5 mm Fett - jeweils zwei Minima im Erregersignal aus, die sich im Dämpfungswert unterscheiden. Mit zunehmender Belagsdicke wandern auch die Frequenzen der Minima zu höheren Frequenzen. Eine inverse Fourier Transformation - in dem Fall eine inverse Fast-Fourier Transformation (IFFT) - transformiert das Erregersignal vom Frequenzbereich in einen Zeitbereich. Das transformierte Erregersignal weist für die Referenzmessung im Zeitbereich von 0 bis 4 ns nur ein Maximum bei einer Laufzeit von ca. 2,4 ns auf, was auch mit der zu erwartenden Laufzeit des Erregersignales durch Wasser übereinstimmt. Bei Vorliegen eines Belages bildet sich ein weiteres Maximum bei niedrigeren Laufzeiten (ca. 0,7 ns) aus. Dieses Maximum ist bei einem Belag mit einer Belagsdicke von 1 mm nur als Schulter ausgeprägt, wächst jedoch mit zunehmender Belagsdicke an, so dass der Amplitudenwert bei bspw. einer Belagsdicke von 5 mm bereits höher ist als der Beitrag des Erregersignales durch das Wasser. Der Grund für das zweite Maximum ist der sich durch den Belag ausbildende weitere Pfad, entlang dem sich das Erregersignal mit einer geringeren Laufzeit ausbreitet. Der Amplitudenwert für die Laufzeit entlang des kürzesten Abstandes nimmt nach Vorliegen eines Belages zu. Das liegt an der verbesserten Einkopplung des Erregersignales in das Wasser durch den Belag auf der Stirnfläche der Mikrowellenantenne.

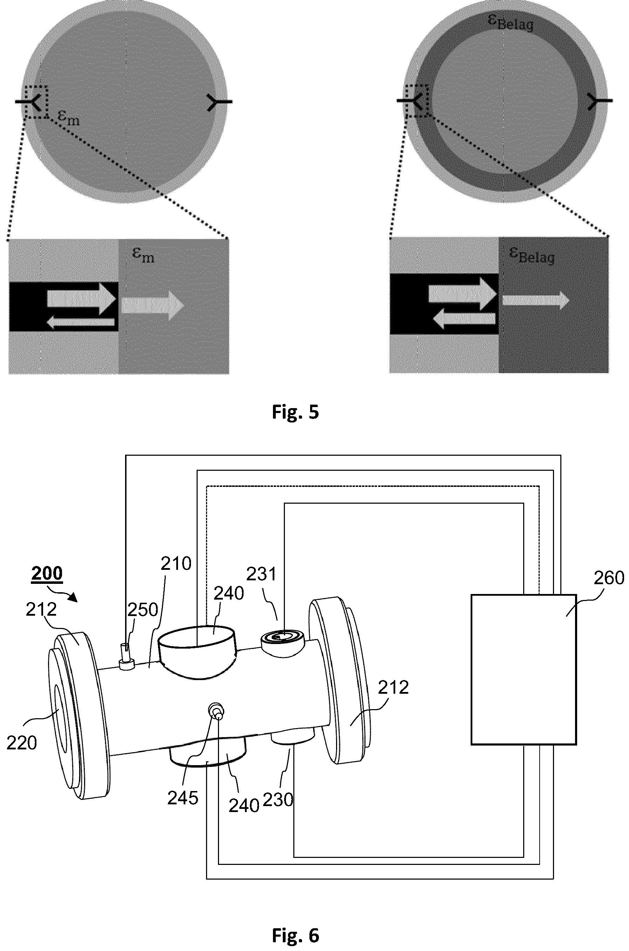

Fig. 5 zeigt eine exemplarische Darstellung zur Wellenausbreitung des reflektierten Erregersignals bei einem Messrohr ohne veränderlichen Belag (links) und mit veränderlichem Belag (rechts). Zudem zeigt die Fig. 5 für die beiden genannten Fälle jeweils eine Nahansicht. Im belagsfreien Fall wird das erzeugte Erregersignal (breiter erster Pfeil in Richtung Medium) zumindest teilweise an der Grenzfläche zum Medium mit der Dielektrizitätskonstante $\varepsilon_m$ reflektiert (schmaler zweiter Pfeil entgegengesetzt zum ersten Pfeil). Ein großer Teil des Erregersignales wird jedoch in das Medium eingespeist (dritter Pfeil im Medium). Liegt ein Belag mit einer Dielektrizitätskonstante $\varepsilon_{Belag} < \varepsilon_m$ auf der Stirnfläche der Mikrowellenantenne vor, so wird ein größerer Anteil des Erregersignales an der Grenzfläche zum Belag reflektiert und durch die Messung an der Mikrowellenantenne detektiert. Dies hat erheblichen Einfluss auf das Messsignal der das reflektierende Erregersignal detektierenden Mikrowellenantenne. Das Messsignal, insbesondere der Dämpfungswert des Messsignales nimmt mit zunehmender Belagsdicke zu.

Fig. 6 zeigt schließlich ein weiteres Ausführungsbeispiel einer Messanordnung 200, welche im Wesentlichen die Messanordnung aus Fign. 1a bis 1e weiterbildet. Zusätzlich zu zwei Mikrowellenantennen 230, 231 für die Mikrowellensignale sind in gleicher Orientierung zwei Feldspulenbaugruppen 240 zur magnetisch-Induktiven Durchflussmessung (MID) an einem Messrohr 210 angeordnet. In der axialen Position der Feldspulenbaugruppen 240 sind senkrecht zur Richtung eines zwischen Feldspulenbaugruppen 240 wirkenden Magnetfelds und senkrecht zur axialen Richtung des Messrohrs zwei einander gegenüberliegende Elektroden 245 angeordnet die sich durch das Messrohr 210 und eine Liner 220 ins Innere des Messrohrs 210 erstrecken, um ein durchflussabhängiges Potential eines strömenden Mediums zu erfassen. (In der Zeichnung ist nur eine Elektrode dargestellt.) Zusätzlich umfasst die Messanordnung 200 einen Temperatursensor 250 zum Erfassen einer Temperatur des Mediums. Die Messanordnung 200 umfasst weiterhin eine Messschaltung 260, an welche die Mikrowellenantennen 230, 231, die Feldspulenbaugruppen 240, die Elektroden 245 und der Temperatursensor 250 angeschlossen sind. Die Messschaltung 260 kann verschiedene Untereinheiten aufweisen, welche unterschiedlichen Messaufgaben der Messanordnung 200 separat bearbeiten. Weiterhin umfasst die Messschaltung 260 einen Hochfrequenzgenerator, welcher dazu eingerichtet ist, zumindest eine der die Mikrowellenantennen 230, 231 mit einer Folge von Hochfrequenzsignalen unterschiedlicher Frequenzen zu speisen. Anstelle der separaten Mikrowellenantennen 230, 231 können in einer Modifikation auch Hohlleiterantennen mit integrierter MID-Elektrode an der Position der Elektroden 245 verwendet werden.

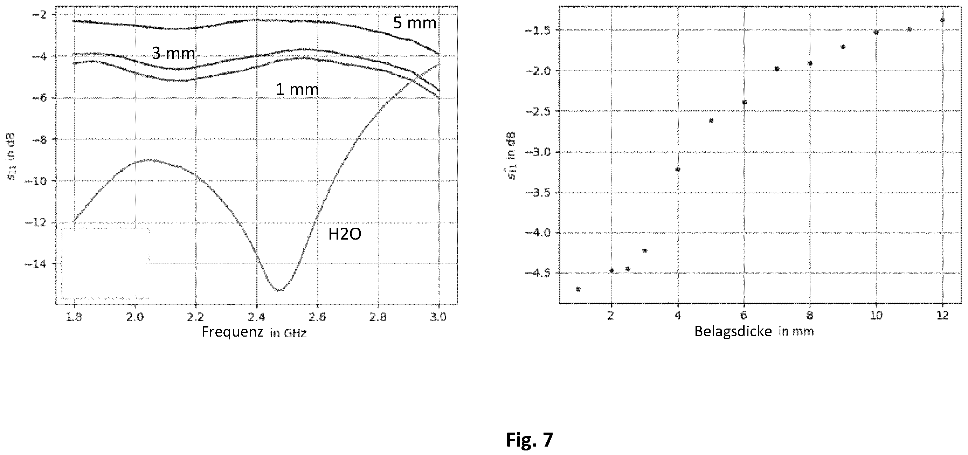

Fig. 7 zeigt ein reflektiertes Erregersignal über einen Frequenzbereich von 1,8 bis 3,0 GHz (linker Grafik) und eine Mittelung des jeweiligen reflektierten Erregersignales in Abhängigkeit der Belagsdicke (rechter Grafik). Das reflektierte Erregersignal bei belagsfreiem Zustand weist zwei ausgeprägte Extrema auf. Im Frequenzbereich von 1,8 bis ca. 2,9 GHz ist die Erregersignalstärke geringer als bei Vorliegen eines Belages. Mit zunehmender Belagsdicke nimmt im Frequenzbereich von 1,8 bis ca. 2,9 GHz auch die Erregersignalstärke zu. Eine Mitteilung der Signalstärke über einen Frequenzteilbereich zeigt eine Belagsdickenabhängigkeit. Anhand der Mitteilung - z.B. Mittelwertbildung, Summierung oder Integral über Frequenzteilbereich - lässt sich auf eine Belagsdicke zurückführen.

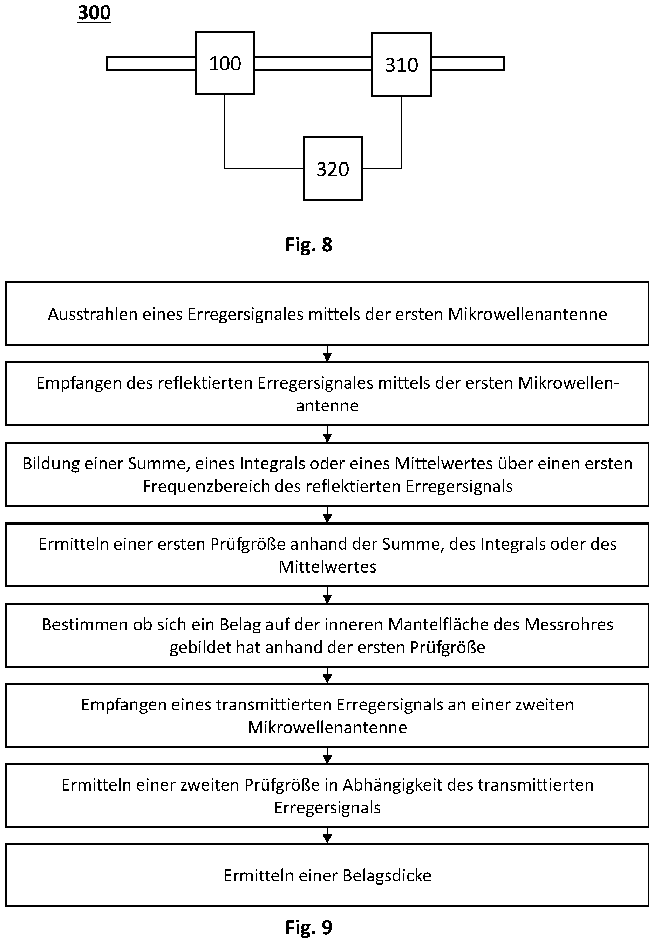

Fig. 8 zeigt schematisch eine Prozessanlage 300 mit einer erfindungsgemäßen Messanordnung 100 und einer Vorrichtung 310 zum Ermitteln einer weiteren Prozesseigenschaft des Mediums, insbesondere eines Volumendurchflusses, welche eine Messschaltung 320 zum Ermitteln einer von der Prozesseigenschaft abhängigen Messgröße aufweist. Diese Messschaltung 320 ist dazu eingerichtet, eine korrigierte Prozesseigenschaft in Abhängigkeit der ermittelten Messgröße und der mittels der Messanordnung 100 ermittelten Belagseigenschaft zu bestimmen. Bei der weiteren Prozesseigenschaft kann es sich beispielsweise um einen errechneten Volumendurchfluss handeln, welcher bei Änderung der Durchflussquerschnittsfläche auf Grund eines Belages auf der inneren Mantelfläche des Messrohres vom tatsächlich vorliegenden Volumendurchfluss abweicht.

Fig. 9 zeigt eine erfindungsgemäße Verfahrenskette des Verfahrens zum Bestimmen einer Belagseigenschaft eines veränderlichen Belages, mit den Verfahrensschritten:

- Ausstrahlen eines Erregersignales mittels der ersten Mikrowellenantenne, welche in einer Aufnahme des Messrohres angeordnet ist. Das Erregersignal eine Folge von Hochfrequenzsignalen, welche mit einem Hochfrequenzgenerator hergestellt werden.

- Empfangen eines reflektierenden Erregersignals mittels der ersten Mikrowellenantenne, welche derart ausgebildet ist, dass sie nicht nur Signale erzeugen, sondern auch empfangen kann. Das Erregersignal kann bspw. ein Dämpfungswert bei einer Frequenz, oder eine Folge von Dämpfungswerten unterschiedlicher Frequenzen.

- Ermitteln einer ersten Prüfgröße anhand des reflektierten Erregersignals. Eine vorteilhafte Möglichkeit zur Ermittlung der ersten Prüfgröße ist die Bildung einer Summe, eines Integrals oder eines Mittelwertes über einen ersten Frequenzbereich des reflektierten Erregersignals.

Gemäß einem Beispiel, das nicht unter den Schutzumfang des Anspruchs fällt, kann die erste Prüfgröße eine erste Frequenz umfassen, insbesondere sein, bei der eine Dämpfung des reflektierten Erregersignals einen Extremwert, insbesondere einen maximalen Wert annimmt, wobei bei Abweichung der ersten Frequenz von einem Frequenzsollbereich auf das Vorliegen eines veränderlichen Belags auf der Stirnfläche geschlossen wird.

Gemäß einem Beispiel, das nicht unter den Schutzumfang des Anspruchs fällt, kann die erste Prüfgröße eine Frequenzdifferenz umfassen, bzw. sein, zwischen einer ersten Frequenz und einer zweiten Frequenz, wobei bei der ersten Frequenz eine Dämpfung des reflektierten Erregersignals einen ersten Extremwert, insbesondere einen maximalen Wert annimmt, wobei bei der zweiten Frequenz die Dämpfung des reflektierten Erregersignals einen zweiten Extremwert, insbesondere einen minimalen Wert annimmt, wobei bei Abweichung der Frequenzdifferenz von einem Frequenzdifferenzsollbereich auf das Vorliegen eines veränderlichen Belags auf der Stirnfläche geschlossen wird.

Gemäß einem Beispiel, das nicht unter den Schutzumfang des Anspruchs fällt, kann die erste Prüfgröße eine Dämpfungsdifferenz zwischen einem ersten Extremwert, insbesondere einem minimalen Dämpfungswert und einem zweiten Extremwert, insbesondere einem maximalen Dämpfungswert, bevorzugt innerhalb eines ersten Frequenzbereiches sein.

Gemäß einem Beispiel, das nicht unter den Schutzumfang des Anspruchs fällt, kann die erste Prüfgröße eine Änderung einer Phasendifferenz zwischen dem ausgestrahlten Erregersignal und dem reflektierten Erregersignal als Funktion der Frequenz oder für eine charakteristische Frequenz sein, wobei bei Abweichung der Änderung von einem Änderungssollbereich auf das Vorliegen eines veränderlichen Belags auf der Stirnfläche geschlossen wird.

Gemäß einem Beispiel, das nicht unter den Schutzumfang des Anspruchs fällt, kann die erste Prüfgröße einen Dämpfungswert und/oder eine Änderung des Dämpfungswertes als Funktion der Frequenz in einem ersten Frequenzbereich sein. Weicht der Dämpfungswert und/oder die Änderung des Dämpfungswertes von einem Dämpfungssollbereich ab, so wird auf das Vorliegen eines veränderlichen Belags auf der Stirnfläche geschlossen.

Alternativ lässt sich anhand der zweiten Prüfgröße ein Soll-Laufzeit bestimmen, deren Amplitudenwert die erste Prüfgröße bildet. Weicht der Amplitudenwert von einem Sollbereich ab, so wird auf das Vorliegen eines veränderlichen Belags auf der Stirnfläche geschlossen.

- Bestimmen der Belagseigenschaft des veränderlichen Belages, insbesondere einer von einer Belagsdicke des veränderlichen Belages abhängigen Größe anhand der ersten Prüfgröße.

- Empfangen des Erregersignales mittels der zweiten Mikrowellenantenne.

- Ermitteln einer zweiten Prüfgröße anhand des transmittierten Erregersignales und/oder anhand einer Transformierten, insbesondere einer Integraltransformierten des transmittierten Erregersignales und bevorzugt anhand einer inversen Fouriertransformierten, wobei die zweite Prüfgröße charakteristisch für die Ausbreitung des Erregersignals entlang eines Ausbreitungspfades durch ein Innenvolumen des Messrohres ist, wobei der Ausbreitungspfad eine zumindest anteilige Ausbreitung des Erregersignales zumindest durch den veränderlichen Belag auf der Stirnfläche der ersten Mikrowellenantenne und einer inneren Mantelfläche des Messrohres beschreibt, wobei in die Ermittlung der Belagseigenschaft des veränderlichen Belages, insbesondere einer von einer Belagsdicke des veränderlichen Belages abhängigen Größe die zweite Prüfgröße eingeht.

- Ermitteln einer Belagsdicke zumindest in Abhängigkeit der ersten Prüfgröße.

Weitere Verfahrensschritte:

- Ermitteln eines korrigierten Rohrquerschnittes in Abhängigkeit der ersten Prüfgröße, wenn Werte der zweiten Prüfgröße von einem Sollwertbereich abweichen.

- Ausgeben eines Warnhinweises, wenn die Werte der ersten Prüfgröße und/oder der zweiten Prüfgröße von einem Sollwertebereich abweichen.

- Ermitteln einer Restdauer bis zur nächsten Reinigung.

- Bestimmen der Belagseigenschaft des veränderlichen Belages, insbesondere einer von einer Belagsdicke des veränderlichen Belages abhängigen Größe anhand der ersten Prüfgröße.

- Empfangen des Erregersignales mittels der zweiten Mikrowellenantenne.

- Ermitteln einer zweiten Prüfgröße anhand des transmittierten Erregersignales und/oder anhand einer Transformierten, insbesondere einer Integraltransformierten des transmittierten Erregersignales und bevorzugt anhand einer inversen Fouriertransformierten, wobei die zweite Prüfgröße charakteristisch für die Ausbreitung des Erregersignals entlang eines Ausbreitungspfades durch ein Innenvolumen des Messrohres ist, wobei der Ausbreitungspfad eine zumindest anteilige Ausbreitung des Erregersignales zumindest durch den veränderlichen Belag auf der Stirnfläche der ersten Mikrowellenantenne und einer inneren Mantelfläche des Messrohres beschreibt, wobei in die Ermittlung der Belagseigenschaft des veränderlichen Belages, insbesondere einer von einer Belagsdicke des veränderlichen Belages abhängigen Größe die zweite Prüfgröße eingeht.

- Ermitteln einer Belagsdicke zumindest in Abhängigkeit der ersten Prüfgröße.

Weitere Verfahrensschritte:

- Ermitteln eines korrigierten Rohrquerschnittes in Abhängigkeit der ersten Prüfgröße, wenn Werte der zweiten Prüfgröße von einem Sollwertbereich abweichen.

- Ausgeben eines Warnhinweises, wenn die Werte der ersten Prüfgröße und/oder der zweiten Prüfgröße von einem Sollwertebereich abweichen.

- Ermitteln einer Restdauer bis zur nächsten Reinigung.

**Patentansprüche**

1. Verfahren zum Bestimmen einer Belagseigenschaft eines veränderlichen Belages auf einer Stirnfläche einer ersten Mikrowellenantenne einer Anordnung (100) zum Bestimmen einer Mediumseigenschaft eines zu führenden insbesondere mehrphasigen Mediums,

wobei die erste Mikrowellenantenne (120) in einer ersten Aufnahme des Messrohres (110), insbesondere mediumsberührend angeordnet ist,
wobei das Verfahren die Verfahrensschritte umfasst:

- Ausstrahlen eines Erregersignales mittels der ersten Mikrowellenantenne (120),

wobei das Erregersignal eine Folge von Hochfrequenzsignalen umfasst;

- Empfangen eines von einer Grenzfläche zu dem Belag oder von einer Grenzfläche zu dem Medium reflektierenden Erregersignals mittels der ersten Mikrowellenantenne (120);
- Ermitteln einer ersten Prüfgröße anhand des reflektierten Erregersignals;
- Bestimmen der Belagseigenschaft des veränderlichen Belages, insbesondere einer von einer Belagsdicke des veränderlichen Belages abhängigen Größe anhand der ersten Prüfgröße;
- wobei die erste Prüfgröße eine Summe, ein Integral oder ein Mittelwert über einen ersten Frequenzbereich des reflektierten Erregersignals umfasst.

2. Verfahren nach Anspruch 1,

wobei die Anordnung (100) eine insbesondere diametral zur ersten Mikrowellenantenne (120) angeordnete zweite Mikrowellenantenne (130) aufweist, welche in einer zweiten Aufnahme des Messrohres (110), insbesondere mediumsberührend angeordnet ist,
umfassend die Verfahrensschritte:

- Empfangen des Erregersignales mittels der zweiten Mikrowellenantenne (130),
- Ermitteln einer zweiten Prüfgröße anhand des transmittierten Erregersignales und/oder anhand einer Transformierten, insbesondere einer Integraltransformierten des transmittierten Erregersignales und bevorzugt anhand einer inversen Fouriertransformierten,

wobei die zweite Prüfgröße charakteristisch für die Ausbreitung des Erregersignals entlang eines Ausbreitungspfades durch ein Innenvolumen des Messrohres (110) ist,
wobei der Ausbreitungspfad eine zumindest anteilige Ausbreitung des Erregersignales zumindest durch den veränderlichen Belag auf der Stirnfläche der ersten Mikrowellenantenne (130) und einer inneren Mantelffläche des Messrohres beschreibt,
wobei in die Ermittlung der Belagseigenschaft des veränderlichen Belages, insbesondere einer von einer Belagsdicke des veränderlichen Belages abhängigen Größe die zweite Prüfgröße eingeht.

3. Verfahren nach Anspruch 2,

wobei das transmittierte Erregersignal eine dritte Frequenz umfasst, bei der die Dämpfung des transmittierten Erregersignals einen dritten Extremwert, insbesondere einen maximalen Wert annimmt,
wobei ausschließlich eindeutig auf das Vorliegen des veränderlichen Belags auf der Stirnfläche geschlossen wird, wenn die erste Prüfgröße, insbesondere die Dämpfung des reflektierten Erregersignales für eine erste Frequenz oder eine gemittelte Dämpfung über einen ersten Frequenzbereich zunimmt und die erste Frequent von der dritten Frequenz abweicht,
wobei die dritte Frequenz einer Messrohrresonanz entspricht.

4. Verfahren nach Anspruch 2 und/oder 3, umfassend den Verfahrensschritt:

- Ermitteln eines korrigierten Rohrquerschnittes in Abhängigkeit der ersten Prüfgröße, wenn die zweite Prüfgröße von einem Sollwertbereich abweicht.

5. Verfahren nach dem mindestens einem der vorherigen Ansprüche,
wobei der erste Frequenzbereich Frequenzen von 0,3 bis 20 GHz, insbesondere von 1,8 bis 7,5 GHz und bevorzugt von 1,8 bis 3,5 GHz aufweist.

**6.** Messanordnung (100), umfassend:

- ein Messrohr (110) zum Führen eines mehrphasigen Mediums,
- eine erste Mikrowellenantenne (120), welche in einer ersten Aufnahme des Messrohres (110) angeordnet ist;
- eine Messschaltung (140),

wobei die Messschaltung (140) einen Hochfrequenzgenerator (150) zum Speisen der ersten Mikrowellenantennen (120) mit einem Erregersignal, insbesondere mit einer Folge von Hochfrequenzsignalen aufweist,

wobei die Messschaltung (140) zudem dazu eingerichtet ist, ein Verfahren nach mindestens einem der vorherigen Ansprüche auszuführen.

**7.** Messanordnung (100) nach Anspruch 6, umfassend:

- eine zweite Mikrowellenantenne (130), welche in einer zweiten Aufnahme des Messrohres (110), insbesondere diametral zur ersten Mikrowellenantenne (120) angeordnet ist,

wobei die Messchaltung (140) dazu eingerichtet ist, anhand eines mittels der zweiten Mikrowellenantenne (130) gemessenen transmittierten Erregersignales mindestens eine Eigenschaft, insbesondere einen Feststoffanteil des in dem Messrohr (110) geführten mehrphasigen Mediums zu bestimmen.

**8.** Prozessanlage, umfassend:

- eine Messrohranordnung nach Anspruch 6 und/oder 7,
- eine Vorrichtung zum Ermitteln einer weiteren Prozesseigenschaft des Mediums, insbesondere eines Volumendurchflusses,

wobei die Vorrichtung zum Ermitteln der weiteren Prozesseigenschaft eine Messschaltung zum Ermitteln einer von der Prozesseigenschaft abhängigen Messgröße aufweist,

wobei die Messschaltung dazu eingerichtet ist, eine korrigierte Prozesseigenschaft in Abhängigkeit der ermittelten Messgröße und der Belagseigenschaft zu bestimmen.

## Claims

**1.** Method for determining a coating property of a variable coating on an end face of a first microwave antenna of an arrangement (100) for determining a medium property of a medium to be guided, in particular a multiphase medium,

wherein the first microwave antenna (120) is arranged in a first receptacle of the measuring tube (110), in particular in contact with the medium,

wherein the method comprises the method steps:

- Emitting an excitation signal by means of the first microwave antenna (120),

where the excitation signal comprises a sequence of high-frequency signals;

- Receiving an excitation signal reflecting from an interface to the coating or from an interface to the medium by means of the first microwave antenna (120);
- Determining a first test quantity using the reflected excitation signal;
- Determining the coating property of the variable coating, in particular a quantity dependent on a coating thickness of the variable coating using the first test quantity;
- wherein the first test quantity comprises a sum, an integral or an average value over a first frequency range of the reflected excitation signal.

**2.** Method according to claim 1,

wherein the arrangement (100) has a second microwave antenna (130) which is arranged in particular diametrically to the first microwave antenna (120) and which is arranged in a second receptacle of the measuring tube (110), in particular in contact with the medium,

comprehensive process steps:

- Receiving the excitation signal by means of the second microwave antenna (130),
- Determination of a second test quantity using the transmitted excitation signal and/or using a transform, in particular an integral transform of the transmitted excitation signal and preferably using an inverse Fourier transform,

wherein the second test quantity is characteristic of the propagation of the excitation signal along a propagation path through an inner volume of the measuring tube (110),

wherein the propagation path describes an at least partial propagation of the excitation signal at least through the variable coating on the end surface of the first microwave antenna (130) and an inner cladding surface of the measuring tube, wherein the second test quantity is included in the determination of the coating property of the variable coating, in particular a variable dependent on a coating thickness of the variable coating.

3. Method according to claim 2,

wherein the transmitted excitation signal comprises a third frequency at which the attenuation of the transmitted excitation signal assumes a third extreme value, in particular a maximum value,

whereby the presence of the variable coating on the end face is only clearly inferred if the first test quantity, in particular the attenuation of the reflected excitation signal for a first frequency or an averaged attenuation over a first frequency range, increases and the first frequency deviates from the third frequency,

where the third frequency corresponds to a measuring tube resonance.

4. Method according to claim 2 and/or 3, comprising the process step:

- Determination of a corrected pipe cross-section as a function of the first test quantity if the second test quantity deviates from a target value range.

5. Method according to at least one of the preceding claims,
wherein the first frequency range has frequencies from 0.3 to 20 GHz, in particular from 1.8 to 7.5 GHz and preferably from 1.8 to 3.5 GHz.

6. Measuring arrangement (100), comprising:

- **a measuring** tube (110) for conducting a multiphase medium,
- a first microwave antenna (120), which is arranged in a first receptacle of the measuring tube (110);
- a measuring circuit (140),

wherein the measuring circuit (140) comprises a high-frequency generator (150) for feeding the first microwave antennas (120) with an excitation signal, in particular with a sequence of high-frequency signals,
wherein the measuring circuit (140) is further adapted to perform a method according to at least one of the preceding claims.

7. Measuring arrangement (100) according to claim 6, comprising:

- a second microwave antenna (130), which is arranged in a second receptacle of the measuring tube (110), in particular diametrically to the first microwave antenna (120),

wherein the measuring circuit (140) is set up to determine at least one property, in particular a solids content of the multiphase medium guided in the measuring tube (110), on the basis of a transmitted excitation signal measured by means of the second microwave antenna (130).

8. Process plant, comprising:

- a measuring arrangement according to claim 6 and/or 7,
- a device for determining a further process characteristic of the medium, in particular a volume flow rate,

wherein the device for determining the further process characteristic has a measuring circuit for determining a measured variable dependent on the process characteristic,
whereby the measuring circuit is set up to determine a corrected process property as a function of the measured variable and the coating property.

**Revendications**

1. Procédé pour déterminer une propriété de revêtement d'un revêtement variable sur une surface frontale d'une première antenne à micro-ondes d'un dispositif (100) pour déterminer une propriété de milieu d'un milieu à guider, en particulier polyphasique,

la première antenne à micro-ondes (120) étant disposée dans un premier logement du tube de mesure (110), en particulier en contact avec le milieu,
le procédé comprenant les étapes de procédé suivantes :

- l'émission d'un signal d'excitation au moyen de la première antenne hyperfréquence (120),

dans lequel le signal d'excitation comprend une séquence de signaux haute fréquence ;

- recevoir un signal d'excitation réfléchi par une interface vers le revêtement ou par une interface vers le milieu au moyen de la première antenne hyperfréquence (120) ;
- Détermination d'une première grandeur de contrôle à l'aide du signal d'excitation réfléchi ;
- déterminer la propriété de revêtement du revêtement variable, en particulier une grandeur dépendant d'une épaisseur de revêtement du revêtement variable, à l'aide de la première grandeur de contrôle ;
- dans lequel la première grandeur de test comprend une somme, une intégrale ou une valeur moyenne sur une première plage de fréquences du signal d'excitation réfléchi.

2. Procédé selon la revendication 1,

le dispositif (100) présentant une deuxième antenne à micro-ondes (130) disposée en particulier de manière diamétralement opposée à la première antenne à micro-ondes (120), laquelle est disposée dans un deuxième logement du tube de mesure (110), en particulier en contact avec le milieu,
comprend les étapes de la procédure :

- la réception du signal d'excitation au moyen de la deuxième antenne hyperfréquence (130),
- Détermination d'une deuxième grandeur de contrôle à l'aide du signal d'excitation transmis et/ou à l'aide d'une transformée, notamment d'une transformée intégrale du signal d'excitation transmis et de préférence à l'aide d'une transformée de Fourier inverse,

la deuxième grandeur de contrôle étant caractéristique de la propagation du signal d'excitation le long d'un chemin de propagation à travers un volume intérieur du tube de mesure (110), le chemin de propagation décrivant une propagation au moins partielle du signal d'excitation au moins à travers le revêtement variable sur la surface frontale de la première antenne hyperfréquence (130) et une surface d'enveloppe intérieure du tube de mesure, la deuxième grandeur de contrôle étant intégrée dans la détermination de la propriété de revêtement du revêtement variable, en particulier d'une grandeur dépendant d'une épaisseur de revêtement du revêtement variable.

3. Procédé selon la revendication 2,

le signal d'excitation transmis comprenant une troisième fréquence à laquelle l'atténuation du signal d'excitation transmis prend une troisième valeur extrême, en particulier une valeur maximale,
dans lequel on conclut exclusivement et sans équivoque à la présence du revêtement variable sur la surface frontale lorsque la première grandeur de contrôle, en particulier l'atténuation du signal d'excitation réfléchi pour une première fréquence ou une atténuation moyenne sur une première plage de fréquences, augmente et que la première fréquence s'écarte de la troisième fréquence,
où la troisième fréquence correspond à une résonance du tube de mesure.

4. Procédé selon la revendication 2 et/ou 3, comprenant l'étape de procédé :

- Détermination d'une section de tube corrigée en fonction de la première grandeur de contrôle, lorsque la deuxième grandeur de contrôle s'écarte d'une plage de valeurs de consigne.

5. Procédé selon l'une au moins des revendications précédentes,
la première gamme de fréquences présentant des fréquences de 0,3 à 20 GHz, en particulier de 1,8 à 7,5 GHz et de préférence de 1,8 à 3,5 GHz.

6. Dispositif de mesure (100), comprenant :

- un tube de mesure (110) pour le guidage d'un fluide polyphasique,
- une première antenne hyperfréquence (120), qui est disposée dans un premier logement du tube de mesure (110) ;
- un circuit de mesure (140),

dans lequel le circuit de mesure (140) comprend un générateur haute fréquence (150) pour alimenter les premières antennes micro-ondes (120) avec un signal d'excitation, en particulier avec une séquence de signaux haute fréquence,
dans lequel le circuit de mesure (140) est en outre adapté pour mettre en œuvre un procédé selon au moins l'une des revendications précédentes.

7. Dispositif de mesure (100) selon la revendication 6, comprenant :

- une deuxième antenne hyperfréquence (130), qui est disposée dans un deuxième logement du tube de mesure (110), en particulier diamétralement par rapport à la première antenne hyperfréquence (120),

le circuit de mesure (140) étant conçu pour déterminer, à l'aide d'un signal d'excitation transmis mesuré au moyen de la deuxième antenne à micro-ondes (130), au moins une propriété, en particulier une proportion de matières solides du milieu polyphasique guidé dans le tube de mesure (110).

8. Installation de traitement, comprenant

- un ensemble de tubes de mesure selon la revendication 6 et/ou 7,
- un dispositif pour déterminer une autre caractéristique de processus du fluide, en particulier un débit volumétrique,

le dispositif de détermination de l'autre propriété de processus présentant un circuit de mesure pour déterminer une grandeur de mesure dépendant de la propriété de processus,
le circuit de mesure étant conçu pour déterminer une propriété de processus corrigée en fonction de la grandeur de mesure déterminée et de la propriété de revêtement.

Fig. 1a

Fig. 1b

Fig. 1c

Fig. 1d

Fig. 1e

**Fig. 2**

**Fig. 3**

Fig. 4

**Fig. 5**

**Fig. 6**

**Fig. 7**

EP 4 264 200 B1

**300**

**Fig. 8**

| |
|---|
| Ausstrahlen eines Erregersignales mittels der ersten Mikrowellenantenne |

↓

| |
|---|
| Empfangen des reflektierten Erregersignales mittels der ersten Mikrowellen-antenne |

↓

| |
|---|
| Bildung einer Summe, eines Integrals oder eines Mittelwertes über einen ersten Frequenzbereich des reflektierten Erregersignals |

↓

| |
|---|
| Ermitteln einer ersten Prüfgröße anhand der Summe, des Integrals oder des Mittelwertes |

↓

| |
|---|
| Bestimmen ob sich ein Belag auf der inneren Mantelfläche des Messrohres gebildet hat anhand der ersten Prüfgröße |

↓

| |
|---|
| Empfangen eines transmittierten Erregersignals an einer zweiten Mikrowellenantenne |

↓

| |
|---|
| Ermitteln einer zweiten Prüfgröße in Abhängigkeit des transmittierten Erregersignals |

↓

| |
|---|
| Ermitteln einer Belagsdicke |

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017160069 A1
- US 9063052 B
- WO 2018121927 A1

**In der Beschreibung aufgeführte Nicht-Patentliteratur**

- **L.F. CHEN** ; **C.K. ONG** ; **C.P. NEO** ; **V.V. VARADAN** ; **V. K. VARADAN**. Microwave Electronics, Measurement and Materials Characterization. John Wiley & Sons Ltd., 2004